# EUROPEAN PATENT SPECIFICATION

(11) **EP 3 684 717 B1**
(45) Date of publication and mention of the grant of the patent: **25.10.2023**
(21) Application number: 18749369.7
(22) Date of filing: 02.08.2018
(51) Int. Cl.: B65G 69/28, G05B 19/042, H02H 7/085

(54) **DOCK LEVELLER CONTROLLER**
STEUERGERÄT FÜR ÜBERLADEBRÜCKE
DISPOSITIF DE COMMANDE DE SYSTÈME DE MISE À NIVEAU DE QUAI

(30) Priority: 20.09.2017 GB 201715184
(43) Date of publication of application: 29.07.2020
(73) Proprietor: TNV-Electronic A/S, 8520 Lystrup (DK)
(72) Inventor: DALL, Hans Hilmar, 8520 Lystrup (DK)
(74) Representative: Marks & Clerk LLP
(86) International application number: PCT/EP2018/070996
(87) International publication number: WO 2019/057381

(56) References cited:
- US-A- 4 394 605
- US-A1- 2006 145 651
- US-A1- 2012 131 755

## Description

### FIELD OF THE INVENTION

Embodiments of the invention described herein relate generally to a controller for a dock leveller and to methods for controlling a dock leveller.

### BACKGROUND OF THE INVENTION

Dock levellers are used to bridge gaps between loading docks and vehicles to be loaded or unloaded. As vehicles vary in height, dock levellers need to be suitable for extending over gaps of different heights.

The speeds at which individual dock levellers rise and lower differ, for example because of different varying ambient temperature, aging of the dock leveller amongst others.

Known dock levellers are set up to have a fixed raise time that allows the dock leveller to move to its maximally raised position, irrespective of the properties of the dock leveller or of the operating conditions, such as ambient temperature. As such, there is no guarantee that the dock levellers are operated in the most efficient manner.

The operation time of such known dock levellers are not adjusted at all, or may sometimes be manually adjusted by a skilled user who has previous experience or knowledge of operating the dock leveller. Even then, it cannot be guaranteed that the skilled person would be able to manually adjust the operation time of the dock leveller such that the dock leveller travels for the most efficient operation time.

Furthermore, some known dock levellers require physical motor protection circuits, which are costly and bulky. Despite this, such motor protection circuits are often unable to detect certain defects in the motor.

US 2012/131755 discloses a loading dock leveller having an integral on-demand air compressor connected to a pneumatic actuator to move a deck of the dock leveller between a downward and an upward inclination.

US 2006/145651 discloses a circuit for detecting an operating transition of a mechanical apparatus driven by a hydraulic pump comprising a hydraulic pump driven by an electric motor, the operating transition causing a change in the force applied by the mechanical apparatus on the pump.

US 4394605 discloses a load drive control system for use with an automobile one-touch window glass or sunroof opening and closing system or antenna vertical movement control system.

The present invention seeks to address, overcome or mitigate at least one of or other disadvantages associated with the requirements in running current dock levellers.

### SUMMARY

According to an aspect of the present invention there is provided a controller for a dock leveller comprising a motor, wherein the controller is configured to determine when the dock leveller is approaching a maximally raised position, by detecting an increase in power consumption of the motor; wherein the controller is configured to determine a first time period taken by the dock leveller to move from its resting position (RP) to its maximally raised position, to thereafter allow the dock leveller to lower for the determined first time perio), to determine a second time period taken by the dock leveller to again move to its maximally raised position and to calculate a speed ratio of the dock leveller based on the first and second time periods; and wherein the controller is configured to adjust operation time of the dock leveller based on the speed ratio and one or both of the acquired time periods.

The dock leveller may be hydraulic. The dock leveller may comprise an extendable lip which may be connected to its main body which is raised. The lip may be configured to fully extend in the maximally raised position. The increase in power consumption of the motor may be caused when the dock leveller is raised to its maximally raised position and cannot move further, hence the increase in resistance to further movement. Increase in power consumption may also be caused when the dock leveller reaches its maximally raised position and the hydraulic fluid in its pump is redirected to extend the lip.

The controller may be configured to output a signal for decreasing power supply to the motor when the maximally raised position is reached.

The controller may be connected between a power source of the motor and the motor of the dock leveller.

The power supply from the power source may be decreased to zero, or the connection between the power source and the motor may be cut off completely.

The controller may comprise a power monitoring unit configured to acquire power consumption values and determine, using the power consumption data acquired, an average power consumption value for comparing against any later calculated power consumption value.

The average power consumption value may be calculated based on a set of power consumption values acquired prior to a first increase in power consumption value is detected.

The average power consumption value may be calculated based on a set of power consumption values acquired prior to a predetermined number of increases in power consumption value are detected. This average value may be used as a reference power consumption value.

The controller is configured to determine that the maximally raised position is reached when an increase in the power consumption by a predetermined amount is detected.

The predetermined amount may be a threshold value for determining a significant increase in power consumption.

The predetermined amount may be 5% to 30% increase. The predetermined amount may be 20% to 25% increase. The predetermined amount may be set depending on the operating conditions of the dock leveller, for example on the stability of the available power supply.

The controller may determine that the dock leveller has reached the maximally raised position when the power consumption becomes constant after the increase.

The power monitoring device may be configured to disregard power consumption data for a predetermined time period after the motor is activated.

Such predetermined time period may be around 300ms. This delay is to ensure that the monitoring device ignores any jump in the power consumption just after the motor is activated.

The power monitoring unit may be configured to determine the power consumption value by taking a measurement of the current for at least two phases of the motor and outputting a signal for decreasing the power supplied to the motor when any of the measured current values is to be zero.

The motor may be a three phase motor. The power monitoring unit may continuously determine power consumption at each sample point of the current signal. The current for the third phase may be calculated as a negative value of the sum of currents in the two other phases. The power consumption value may then be calculated using the current values taken, as root mean squared of the three phase current values obtained.

The controller may comprise a switch connectable to interrupt a power supply to the motor of the dock leveller, the controller configured to output a signal for the switch to open when the most recently calculated power consumption exceeds the average power consumption by at least a safety factor. In one embodiment the controller is configured to not act upon a measured power consumption that exceeds the average power consumption or the average power consumption plus the safety factor for a predetermined period of time to ensure that transient power spikes do not cause operation of the dock leveller to be suspended.

In one embodiment the average power consumption is allowed to be exceeded by a factor of k for a predetermined time t, wherein the k²*t is constant. By squaring the power excess factor k account is taken of the fact that, when the current supplied to the motor is doubled, the dissipated power is squared.

The safety factor may be at least two (or three or where power consumption hits full scale deflection). The safety factor may be set by the user.

The switch may also be a contactor, wherein said signal causes the switch to open and decrease the power supplied to the motor. The motor may be deactivated completely.

The first time period may represent a first speed of the leveller moving from the resting position to the maximally raised position and the second time period may represent a second speed of the leveller moving away from the maximally raised position (i.e. the speed at which the dock leveller is lowered towards the resting position). This is based on the knowledge that the first time value and the second time value will differ if the first speed (i.e. the speed with which the dock leveller moves from the resting position to the maximally raised position) and the second speed (i.e. the speed with which the dock leveller moves downwards from maximally raised position) differ. If the first speed and the second speed differ, the dock leveller will have moved different distance over the same amount of time. In other words, the maximally raised position, which the controller can detect when the leveller reaches it, may be used as a reference point. The ratio between the first time period and the second time period may be equivalent to the ratio between the first speed and the second speed.

The operation time of the dock leveller may be controlled by outputting a signal for activating or deactivating the motor.

The resting position may be between the maximally raised position and the maximally lowered position.

The controller may be configured to determine a duration required by the dock leveller to return from its maximally extend position to the resting using the speed ratio.

The speed ratio may be used to calculate the time required for the dock leveller to return to the resting position from any raised position. Equally the speed ratio may be used to ensure correct timing when the dock leveller is returned to its resting position after use. A dock leveller having an extending lip to allow the leveller to rest on the loading edge of a vehicle cannot allow the lip to retract whilst the leveller is lowering from the maximally raised position as, if it did, the lip may already be retracted when the dock leveller is lowered to the level of the vehicle's loading edge. For this reason some dock levellers require to be raised again for a period of time. During this period of time hydraulic fluid that had previously been directed into the hydraulic cylinders that extend the lip, can drain from the cylinders, thereby allowing the lip to retract. In some dock levellers hydraulic fluid is used to raise the dock leveller and, once in the maximally raised position, the fluid is re-directed to the lip extending hydraulic cylinders, extending the lip. To avoid a repeated extending of the lip the maximally raised position must therefore not be reached in operations aiming to retract the lip. As the above mentioned speed ratio is known the controller can estimate the time required to raise the dock leveller to its maximally raised position. Based on such an estimate of the controller can then activate the motor of the dock leveller for a period of time that is shorter than the estimated period of time to ensure that the lip can retract.

An unclaimed controller for a dock leveller that comprises a motor is also described. The controller is configured to raise the dock leveller from a use position for a period of time that is known, based on parameters of the dock leveller stored in a manner readable by the controller, to place the dock leveller in readiness for storage in a storage position and, after said period of time, lowering the dock leveller to the storage position.

The position to which the dock leveller is raised during the period of time can be lower than the highest position to which the dock leveller can be raised.

The stored parameters may be the above mentioned speed ratio and/or a known raised height in the use position.

The controller may further be configured to allow the dock leveller to lower for a period of time that is sufficient for the dock leveller to reach its maximally lowered position, to subsequently raise the dock leveller until it has reached it maximally raised position and to subtract the first time period from the time required to reach the maximally raised position from the maximally lowered position, thereby determining a time period required for the dock leveller to reach the resting position from the maximally lowered position.

According to another aspect of the present invention, there is provided a dock leveller system comprising a controller described above, a dock leveller, a power source and a switch wherein the controller is connected between the dock leveller and the power source.

The controller of the dock leveller system may comprise output ports connected to electrically activatable hydraulic valves of the dock leveller system.

The controller may be configured to output valve actuation signals via the output ports to open hydraulic valves to allow raising and/or lowering of the dock leveller and/or to close hydraulic valves to maintain the dock leveller a a chosen elevation.

According to another aspect of the present invention, there is provided a method of controlling the dock leveller comprising a motor, the method comprising: determining when the dock leveller is approaching a maximally raised position, by detecting an increase in power consumption of the motor, wherein the method comprises determining a first time period taken by the dock leveller to move from its resting position to its maximally extended position, to thereafter allow the dock leveller to lower for the determined first time period, and determining a second time period taken by the dock leveller to again move to its maximally extended position and to calculate a speed ratio of the dock leveller based on the first and second time periods; and wherein the method comprises adjusting operation time of the dock leveller based on the speed ratio and one or both of the acquired time periods.

The method may comprise outputting a signal for decreasing power supply to the motor when the maximally raised position is reached.

The method may comprise acquiring power consumption values and determining, using the power consumption data acquired, an average power consumption value for comparing against any later calculated power consumption value.

The method comprises determining that the maximally raised position is reached when an increase in the power consumption by a predetermined amount is detected.

The method may comprise disregarding power consumption data for a predetermined time period after the motor is activated.

The method may comprise determining the power consumption value by taking a measurement of the current for at least two phases of the motor and outputting a signal for decreasing the power supplied to the motor when any of the measured current values is to be zero.

The method may comprise outputting a signal for a switch, connectable to interrupt a power supply to the motor of the dock leveller, to open when the most recently calculated power consumption exceeds the average power consumption by at least a safety factor.

According to another aspect of the present invention, there is provided a computer storage medium comprising code for execution by a processor, the code, when executed by a processor causing the processor to perform the above described method.

According to the present invention, the controller may carry out a number of functions including the following: determine whether the leveller is approaching a maximally raised position and control the operation time of the leveller, determine whether the leveller is running against a fixed mechanical stop and should not be raised further, whether the dock leveller is running as normal, whether there are any broken wires in the motor and output a signal to inactivate the motor, and/or whether there are any other issues in the motor that it should be inactivated.

Therefore, according to the present invention there is provided an adaptive controller, which is able to adjust the operation times of the dock leveller by monitoring the power consumption of the motor, wherein the power consumption of the motor is affected by the motor (such as its size or power rating), hydraulic pumps and dock levellers (that may move in varying speeds depending on the individual motor, pump and leveller combinations).

### BRIEF DESCRIPTION OF THE DRAWINGS

FIG. 1A illustrates a dock leveller in a resting position;
FIG. 1B illustrates a dock leveller in a maximally raised position;
FIG. 1C illustrates a dock leveller in a maximally lowered position;
FIG. 2A to 2D illustrate the operation time finding principle of the present invention;
FIG. 3 illustrates an embodiment of the dock leveller controller system according to the present invention when installed to be in connection with a dock leveller and a power source;
FIG. 4 illustrates an example oscilloscope graph of a current signal of a single phase;
FIG. 5 is a function block diagram illustrating sampling of the current signal received to obtain a signed current value of each of the phases according to an embodiment of the present invention;
FIG. 6 is a function block diagram illustrating obtaining of the power measurement values according to an embodiment of the present invention;
FIG. 7 is a flow chart illustrating the overall running modes of the dock leveller which the controller can initiate according to an embodiment of the present invention;
FIG. 8 is a flow chart illustrating a manual operation algorithm;
FIG. 9 is a flow chart illustrating an automatic operation algorithm;
FIG. 10 is a flow chart illustrating an automatic return to resting position sequence algorithm;
FIG. 11 is a flow chart showing the steps used for finding time constants which represent the operation time of the dock leveler; and

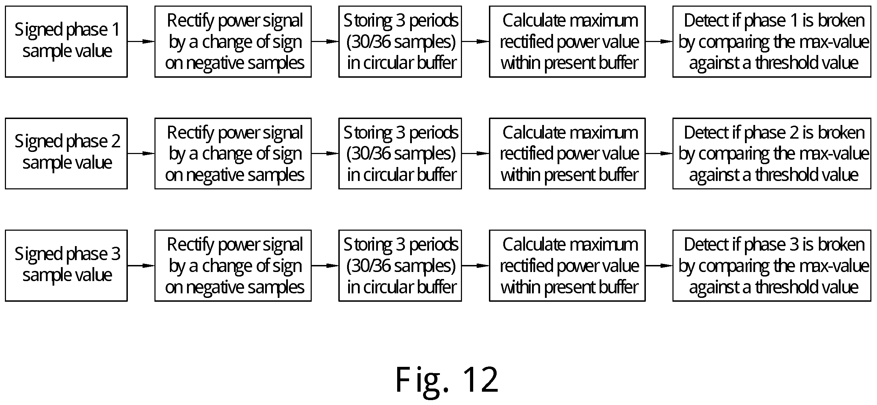

FIG. 12 is a function block diagram illustrating detection of a broken wire according to an embodiment of the present invention.

### DETAILED DESCRIPTION

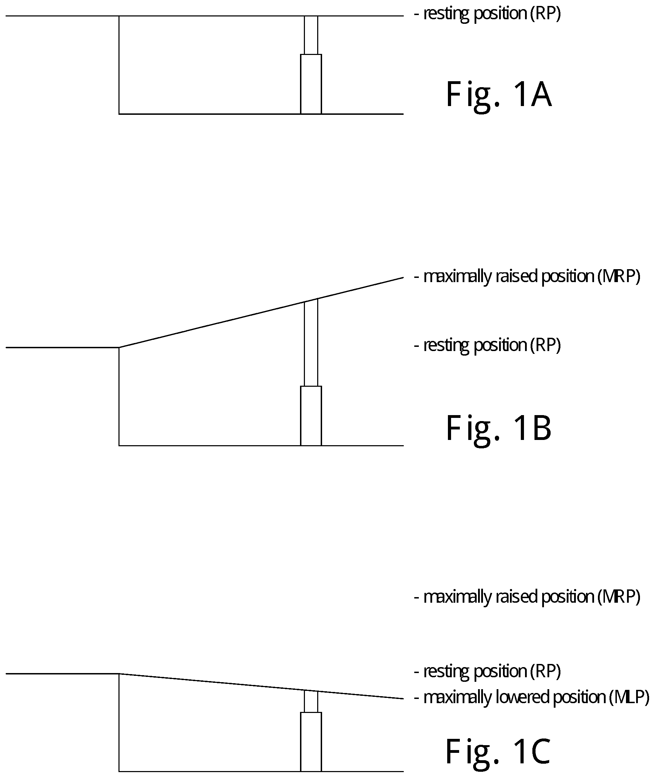

FIGs. 1A to 1C illustrate a dock leveller in different positions, more specifically in its resting position, maximally raised position and maximally lowered position. As can be seen, a dock leveller can be raised or lowered to match the level of the vehicle to be loaded. FIG. 1A illustrates a dock leveller in a resting position, also known as a cross traffic position, which is the position that the dock leveller adapts when not in use. The dock leveller may return to this position after having been operated to be raised or lowered.

The dock levellers are raised or lowered using a pump, for example a hydraulic pump, which is also illustrated in the Figures. The pump is driven by an electric motor, which is not illustrated.

Although not specifically illustrated in the Figures, dock levellers may comprise an extendable lip which may be connected to its main body which is raised, also called a ramp.

FIG. 1B illustrates the dock leveller in its maximally raised position. If the dock leveller comprises a lip, the lip starts to extend to the position it is required to adapt for loading and unloading as the dock leveller has reached this maximally raised position. In such dock levellers the lip is in a fully extended position when the dock leveller reaches the maximally raised position. Once the lip is in the extended position it stays in this position whilst the dock leveller is lowered onto a loading edge of a vehicle. The time it takes for the dock leveller to move from the resting position to the maximally raised position may be considered as T(resting to top), wherein "top" is the maximally raised position. As noted in the background section, the time T(resting to top) may vary depending on the dock leveller, and this time may even vary for the same dock leveller as it can be affected by various different factors. For example, each dock leveller's maximally raised position may vary depending on its structure, and each dock leveller may move at a different speed. Any time variation within a single dock leveller may be influenced by, for example, the ambient temperature surrounding the dock leveller. Some dock levellers are hydraulically operated, with a motor driving a pump for the hydraulic fluids used for raising and lowering the leveller and/or for extending the lip. For example, a dock leveller in a low temperature may operate more slowly than when in a higher temperature, due to the liquid in the hydraulic pump changing its fluidic characteristics in varying temperatures.

FIG. 1C illustrates the dock leveller in its maximally lowered position. Some known dock levellers move between different positions to cause the lip to move from the extended position used for loading/unloading of vehicles back to the resting position the lip is required to adopt when the dock leveller is "stored" in the resting position shown in FIG. 1A. The time it takes to move from the resting position to the maximally lowered position, which may be considered as T(resting to bottom), is also unknown. The time T(resting to bottom) may vary for the same reasons as in T(resting to top). In addition, T(resting to bottom) and T(resting to top) may also be different, as the speed that the dock leveller moves up and down may not be the same.

Due to the unknown travel time for the dock leveller to move between various positions, known dock levellers are set up to run for a predetermined duration that is long enough to ensure that the dock leveller reaches the maximally raised position or a position between these maximally raised and maximally lowered positions that may be used to ensure that the lip is retracted for the resting position. This essentially means that the dock leveller's motor is activated even after the maximally raised position or other positions has been reached, which results in a waste of energy running the dock leveller for an unnecessarily amount of time.

The dock leveller controller according to the preferred embodiment is able to automatically control the dock leveller during operation such that the dock leveller is not operated for longer than it needs to be. In addition, the controller is able to automatically calculate the time it takes for the dock leveller to move between various positions and use this information to control the dock leveller in the most power efficient manner when returning to its resting position.

Unlike known dock levellers, the dock leveller according to the preferred embodiment is able to determine when the dock leveller is approaching the maximally raised position by monitoring the power consumption of the motor. Using this information, the dock leveller is able to output a signal which results in the motor becoming deactivated when it determines that the dock leveller is in its maximally raised position. Therefore, the dock leveller does not need to be configured to run for a predetermined time which may be longer than what is necessary.

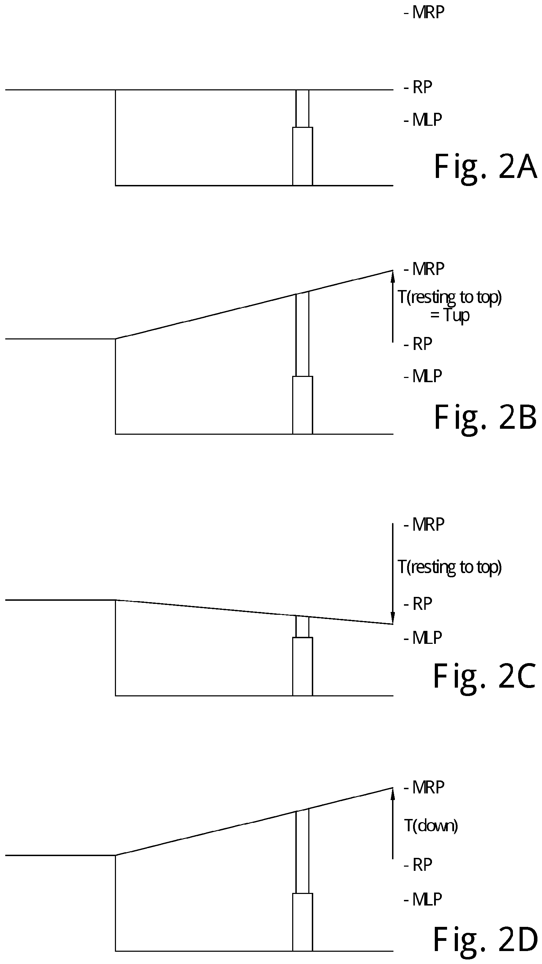

In addition, the time periods for the dock leveller to travel between its different positions are calculated based on the determination of when the dock leveller approaches the maximally raised position. The operation time finding principle of the preferred embodiment is discussed with reference to FIGs. 2A to 2D. The dock leveller is assumed to be in its resting position at the start of its operation, as shown in FIG. 2A. As such, the dock leveller according to the preferred embodiment is able to find T(resting to top) simply by starting a clock when the motor is activated from the resting position and stopping the clock when the dock leveller reaches the maximally raised position, which can be determined from power consumption monitoring. This T(resting to top) can also be considered as Tup, which represents the time it takes for the dock leveller to move up from its resting position to its maximally raised position. This is illustrated in FIG. 2B.

As in FIG. 2C, after the dock leveller reaches the maximally raised position, it is allowed to travel down for the duration of Tup. In some embodiments the dock leveller motor may be driven to move down, and in other embodiments the dock leveller's motor may be inactivated and the dock leveller be allowed to move down under gravity. The dock leveller is allowed to travel down for the duration of Tup by restarting the clock when the dock leveller reaches the maximally raised position, so that the clock continues to run for the time period of Tup. When the clock measures Tup such that the dock leveller has been travelling down for the time period of Tup, it will be at an unknown position as illustrated in FIG. 2C. Whilst the dock leveller is depicted as having travelled below the resting position in this case, the dock leveller may not have reached the resting position in some cases. From this unknown position, the motor is activated again so that the dock leveller travels from the unknown position to its maximally raised position, as in FIG. 2D. The above discussed power monitoring function is again used to detect when the dock leveller has reached this position. The time it takes for the dock leveller to move from the unknown position to the maximally raised position is considered as T(down). This is because this time period represents the speed that the dock leveller must have travelled down to the unknown position from the maximally raised position.

Therefore, the dock leveller according to the preferred embodiment is able to obtain T(resting to top) and the speed ratio of the dock leveller when it moves up and when it moves down. Using this information calculated and obtained from the dock leveller, the dock leveller controller calculates optimal operation time of the dock leveller when it returns to its resting position.

As such, automatic control and calculation of the operation time for the dock leveller to return to its resting position can be achieved by the dock leveller controller according to the preferred embodiment, as the controller is configured to determine when the dock leveller is approaching the maximally raised position from the power consumption (of the motor) data it acquires. The method that the controller acquires the power consumption data also enables the controller to function as a protection circuit and detect any broken wire in any of the phases in the motor. As such, the controller according to the preferred embodiment is able to operate the dock leveller efficiently as well as replacing bulky motor protection circuit and providing an additional function that a typical protection circuits cannot provide.

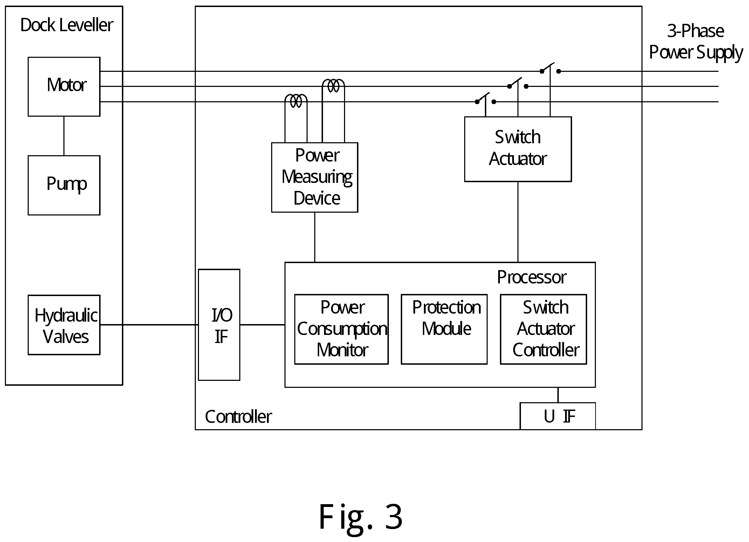

FIG. 3 is a function block diagram which illustrates an embodiment of the dock leveller controller system according to the preferred embodiment when installed to be in connection with a dock leveller and a power source.

A typical dock leveller system includes a dock leveller, a power source, a motor protection circuit and a user interface for the user to manually operate the dock leveller. The dock leveller typically comprises a ramp and a lip, as mentioned above, which can be moved by a pump of some dock levellers. The pump is generally driven by a three phase electric motor, which is powered by the power source.

In the embodiment of the dock leveller controller system a controller is provided in the power supply leading to the motor. In this embodiment, there are three switches each connected to one of the phase line of a three phase power supply. The switches may be a contactor. The switches are connected between the motor and the three phase power supply, such that when the switches are open the motor has no power and is hence inactivated, and when the switches are closed the motor is supplied with power and is hence activated. When the motor is activated, it drives a pump that it is connected to, and the dock leveller is configured to move toward its maximally raised position.

The switches are (de-)activated by a switch actuator which is connected between the switches and a processor of the controller. The switch actuator is configured by the processor. The processor is configured to output an activation signal or a de-activation signal. When an activation signal is output to the switch actuator, the switch actuator activates the switches, wherein the switches close, so that the motor is connected to the power supply. Thus, activation signal results in an increase of the power supplied to the motor, and activates the motor. When a de-activation signal is output to the switch actuator, the switch actuator de-activates the switches, wherein the switches open, so that the motor is disconnected from the power supply. Thus, de-activation signal results in a decrease of the power supplied to the motor, often removing all the power supplied altogether, hence deactivating the motor. The controller is operative to, following activation of the motor at the beginning of a dock levelling process, move the dock leveller from a resting position to a maximally raised position. If the leveller was in a position that is lower than the resting position, the leveller is moved to a position that is closer to the maximally raised position.

The processor comprises a power consumption monitor, a protection module and a switch actuator controller. The processor receives power consumption data of the motor from a power measuring device. Based on the power consumption data (and running an appropriate algorithm corresponding to an operation mode chosen by the user), the switch actuator controller outputs a signal to the switch actuator for the motor to activate or inactivate. The processor receives any user input through a user interface. The user interface may be formed by buttons for the user to press for selecting a function, which may include a manual function for overriding any controller functions, and/or visual and/or audio indicators to indicate what function is being run by the controller (or that an error has occurred).

In this embodiment, the dock leveller comprises hydraulic valves, which may be configured to open or close to hold the dock leveller in a certain position if needed. The hydraulic valves are connected to an input/output interface of the controller.

The power consumption data are acquired by measuring the current values through the phases connected to the motor. The power measuring device comprises two inductive sensors/current-coils placed adjacent the two respective phases carrying power to the motor. As such, the power drawn by the motor can be measured by the power measuring device. In FIG. 3, the power measuring device, the switch actuator, the processor and the switches are illustrated as being a part of the controller. Whilst the controller may comprise the said portions as a single integrated structure, various different portions may be provided separately to the controller. For example, the switches do not have to be integrally formed with the main body of the controller and may be provided separately.

The processor may be a microcontroller/processor, wherein computer executable code is stored in memory for execution.

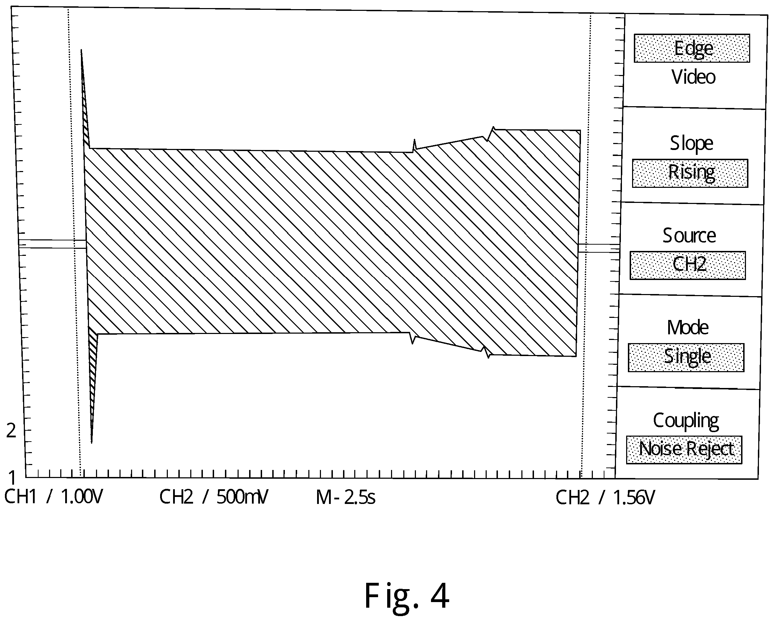

The controller according to this embodiment of the present invention determines when the dock leveller is approaching its maximally raised position, by detecting an increase in the power consumption of the dock leveller. The increase in the power consumption occurs in a dock leveller when it approaches the maximally raised position. This is because the extending of the lip adds further power requirements to the process of raising the dock leveller. This increase in power consumption can be seen in FIG. 4, which illustrates an example oscilloscope graph showing an example power consumption of the dock leveller motor calculated from the measurements obtained from the inductive sensors/current-coils as discussed above. Here, it will also be noted that there is a power consumption spike just after the motor is turned on, due to the sudden flow of power. To enable disregarding this spike, power consumption monitoring only starts after a set amount of time after the motor has been activated, usually at least around 300ms after the motor has been activated. Alternatively, power consumption data acquired during this set amount of time are simply disregarded by the controller.

In FIG. 4, a smaller spike (than the one discussed above) can be seen just before the power consumption starts to increase. In this embodiment, the smaller spike is caused by the sudden re-directing of the hydraulic fluid to move the lip to extend. The general increase in the power consumption which occurs after the occurrence of the spike is at least in part caused by effort required to extend the lip.

It is noted that the after an increase of around 20-25% in the power consumption, the power consumption once again becomes relatively constant. The power consumption stops increasing and becomes constant again because the maximally raised position has been reached. As such, it can be determined that the dock leveller has reached the maximally raised position when an increase of around 20-25% in power consumption has been detected. In other embodiments, it may be possible to determine that the maximally raised position is reached by determining a constant power consumption after a detection in increase. In other words, after an increase in power consumption has been detected, subsequent power consumption values may be compared against each other to check if the difference between a predetermined number of consecutive power consumption values are below a predetermined threshold value. If the difference is below the predetermined threshold value, it is considered that the power consumption is once again constant. Various other methods may also be used for determining whether the power consumption has become constant.

The controller comprises a power measuring device that measures the power drawn by the pump motor of the dock leveller and a timer. In the present embodiment, the power is measured for two of the three power phases by means of two inductive sensors/current-coils placed adjacent the two respective phases carrying power to the motor. The primary winding of a sensor for a single phase in an embodiment is constituted by a wire windings of the phase of the motor supply line. In other embodiments, the power measurement can taken only for a single phase using a single sensor instead of the two sensors described above. However, measuring two phases allows a broken wire to be detected. This will be discussed in more detail below. It will be appreciated that, although reference is made to two sensors above, these two sensors may be combined in a single housing, whilst providing an indication of the amount of power conveyed via the two monitored phases of the power supply.

As noted above, the power consumed is measured for two of the three power phases by means of two current-coils of two wire windings from the motor supply line. The controller is connected to the two inductive sensors at the wire windings of the motor supply line. Each inductive sensor provides a signal, preferably an AC signal on its secondary side, wherein the AC signal amplitude is in proportion to the current drawn by the motor. The AC signals are amplified and filtered by a band pass filter in one embodiment if required. Appropriate crossover frequencies may be set according to the frequency of the mains power system. In general and in this embodiment, the frequencies are set to be between 50 Hz and 60 Hz to ensure proper operation whether connected to a 50 Hz or 60 Hz mains power system. The filtered signals are fed into an Analog-to-Digital Converter (ADC) within the microcontroller. In one embodiment, the signals are sampled at a frequency of around 600Hz. From this, the controller acquires current data which indicates the amount of current flowing into the motor in the two phases of the motor. It is well known that the total sum of current flowing into the motor on the three phases must always be zero. Using this relationship between the current flowing into the motor through the three phases, it is possible to calculate the current through all three phases from knowing the current through two phases. Once the electrical current data for the two phases are obtained, the current for the third phase is simply calculated as a negative value of the sum of current values that represent the currents in the two other phases. In one embodiment the controller is additionally configured to determine the relative phase between the monitored conductors. During setup of the controller the phase relationship required for the motor to turn in the desired direction is stored in memory. The controller is configured to de-activate the motor if the phase relationship detected during operation differs from the stored phase relationship.

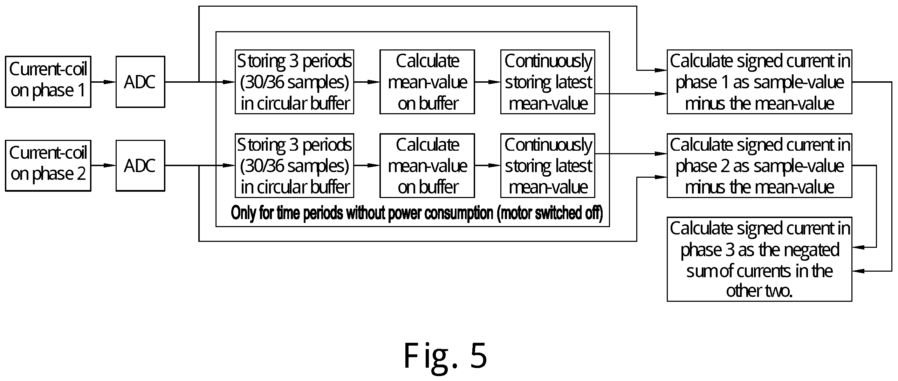

The power consumption monitoring function is illustrated in FIG. 5. FIG. 5 is a function block diagram which shows current signal from current-coil on phases 1 and 2 of the motor. The inductive sensor used in the preferred embodiment provides an output voltage between 0 to 3.3 volt (this value may vary). The ADC samples the two current signals which represent the power at a sampling frequency of 600Hz. A different sampling frequency may be chosen. In the present embodiment, 600Hz is chosen as to equal an even number of samplings per period for both 50Hz mains power system (12 samples per period) and a 60 Hz mains power system (10 samples per period). The ADC generates absolute sample current values at 12 bit resolution. It will be appreciated that the 12 bit resolution used in this embodiment may be varied, depending on accuracy requirements. A lower resolution may, for example, be chosen if reduced accuracy is acceptable.

When the motor is deactivated, which means that there is no power load, sample values from the last three periods of the mains power are stored in a circular buffer, and the mean value of the sample values stored is continuously calculated. This can be seen in the box in the middle which is labelled as "only for time periods without power consumption (motor switched off)". Here, the samples from 3 periods (30 samples for a 60 Hz power system and 36 samples for a 50Hz power system) are stored in a circular buffer for each of the current coils for phase 1 and 2, then the mean value is calculated from the stored value in the circular buffer. This mean value represents a virtual ground level. As the skilled person will appreciated, other sampling buffer sizes, sampling rates and periods sampled may be chosen.

When the motor is activated, signed current sample values can be calculated by subtracting the virtual ground value calculated above from the actual sample value measured. The current in the third phase is calculated as the negated sum of the currents in the other two phases.

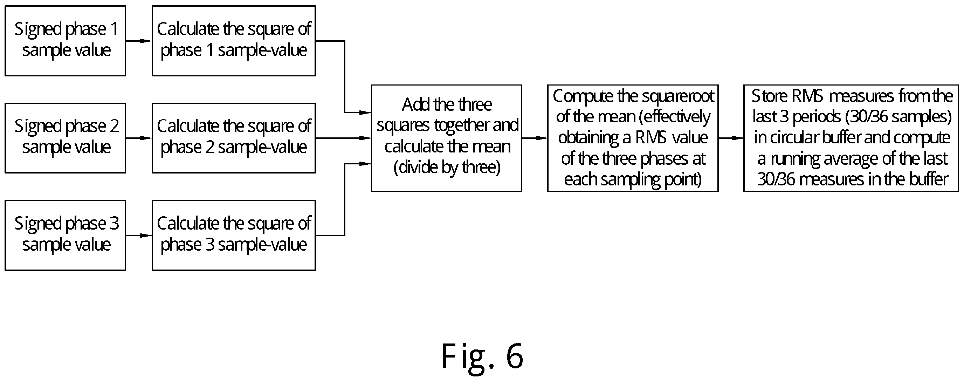

The current values determined for all three phases are used to calculate the RMS power applied to the motor as illustrated in FIG. 6. In one embodiment this calculation is performed at each sampling point. Such RMS power measurement values calculated are generally stable. These fluctuation are mostly removed by averaging the RMS power values of the entire set of RMS power values within the circular buffer from the last three measurement periods. Any fluctuations in the current values measured and calculated may further be suppressed by applying various statistical algorithms, such as a running moving average algorithm.

In the present embodiment, the 36 current value measurements, which represent power consumption, are stored in a circular buffer. At a 600 Hz sampling rate this is equivalent to the power samplings of three periods of mains power at 50Hz. An average value, for example a mean value, of the current measurement values is calculated every time a new current measurement value is added. As such, any new current value obtained can be compared against the latest mean current value calculated based on the previous current measurements. The controller may be configured to disregard any fast fluctuations in the current value change, which represents a change in the power consumption, by using a running averaging the current values obtained, using a trend analysis or other means such as low pass filtering. For example, a trend analysis algorithm may be applied to the series of measurements stored in the circular buffer in order to obtain a more accurate indication of the leveller approaching the maximally raised position. Such algorithms may enable the controller to ignore any values that merely represent fast fluctuations in the power that are due to mechanical conditions or movements in the motor. In other embodiments, the controller may also be configured to determine that there has been an increase in the power measurement only if there has been an increase continuously for a certain number of past measurements.

A reference power consumption value may also be calculated, which is a single value calculated from a predetermined number of samples taken from each motor activation cycle. The samples used to calculate the reference power consumption value are taken only from before any increase in the power consumption is detected, wherein these sample values may be averaged. Such reference power consumption values generated for each motor activation cycle are stored for use in protection function of the controller.

With the above described power monitoring function in place, the controller is able to carry out a number of functions including the following: determine whether the leveller is approaching a maximally raised position and control the operation time of the leveller, determine whether the leveller is running against a fixed mechanical stop and should not be raised further, whether the dock leveller is running as normal, whether there are any broken wires in the motor and output a signal to inactivate the motor, and/or whether there are any other issues in the motor that it should be inactivated. Each function will be discussed in turn. It will be appreciated that providing every single of these functions on its own or combined with one or more of the other functions is advantageous in its own right, so that the present invention is not intended to be limited to embodiments that comprise all of these functions. Instead the present invention encompasses all embodiments comprising one or more of these functions.

At first when the motor is activated, there is a power consumption spike due to the connection and the sudden flow of current occurs. Current flow becomes steady after a period of time that is dependent upon the components of the dock leveler controller. In the embodiment stability is achieved after the motor runs for around 300 milliseconds. After this period of time the power consumption accordingly also settles down to an average value. What can be considered as a snapshot of the steady state power is obtained by taking an average power consumption value as discussed above. In other words, power consumption measurements are obtained as a snapshot for each motor activation cycle then averaged to result in a single average power consumption value representing the average power consumption value for the motor activation cycle. The average power consumption value is saved with other average power consumption values from previous motor activation cycles. These average power consumption values are considered to represent an acceptable power consumption of the motor when it is in a steady state. The controller therefore obtains a database of steady state power consumption values over time. A moving average of the steady state power consumption values may be calculated, wherein this value is used to determine whether the current average power consumption value is higher than at least a predetermined value. In other embodiments, the highest or the lowest value could be used to check whether the current average power consumption is within a threshold range calculated using such two values. Other methods of determining whether the current measurement is within the threshold limit or not may be used, for example by calculating the mean and the variance for the average power consumption measurements. The variance may be calculated as the square of the standard deviation, for example.

Known dock levellers do not monitor power consumption of the motor as above and hence do not have the ability to detect when they have reached a maximally raised position. This means that despite what the conditions of the dock leveller may be, the motor running time set for the dock leveller needs to be set to be significantly higher than what may actually be needed for the dock leveller to be in the maximally raised position in order to absolutely make sure that the dock leveller is in the maximally raised position. Otherwise, the dock levellers need to be operated manually so that the user visually determines when to turn the motor of the dock leveller on and off.

In contrast, the dock leveller of the embodiment is able to detect when the dock leveller has reached the maximally raised position by detecting the power increase that occurs when the leveller reaches the maximally raised position, and uses this information to perform a number of different functions and modes with the switch actuator controller and the protection module being configured to perform a number of different algorithms.

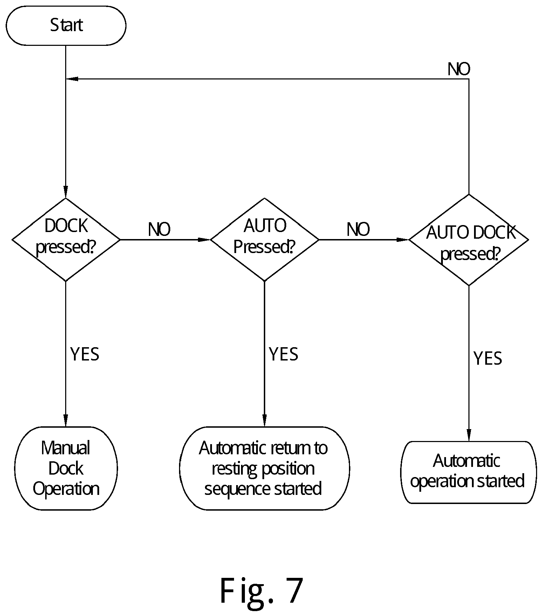

The overall running modes of a dock leveller of an embodiment is illustrated as a function block diagram in FIG. 7. As can be seen here, the dock leveller can be run manually or automatically.

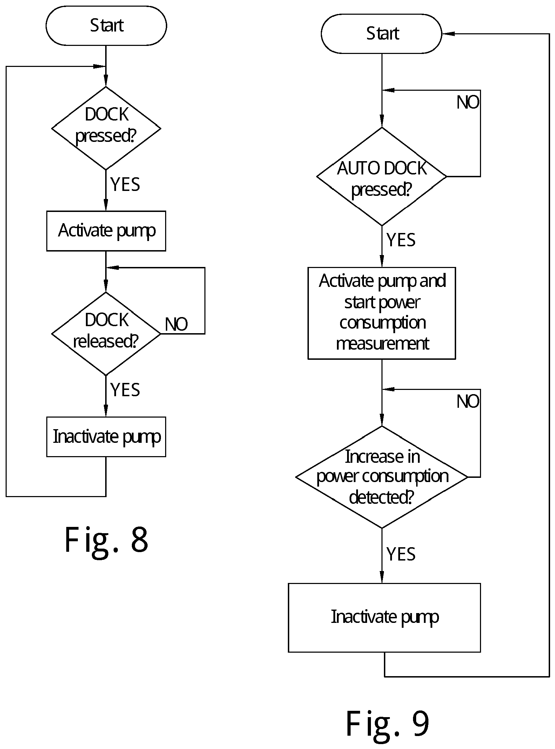

The dock leveller can be run manually when a "DOCK" button, which may be a part of the user interface, is pressed by the user. The manual operation is illustrated in more detail in FIG. 8. In essence, the Dock button activates the pump when pressed and inactivates the pump when released. As such, the user can press the dock button when he wishes to raise the dock leveller and release the button when he wishes to lower the dock leveller.

There are two automatic modes, which are started by pressing an "AUTO" button or an "AUTO DOCK" button, as indicated in FIG. 7. Pressing of the AUTO button results in the controller outputting signals to the motor to start an automatic return to resting position sequence. In other words, the dock leveller returns to the resting position automatically regardless of what position it was in. AUTO DOCK button starts the automatic operation mode which is described in more detail in FIG. 9. The pressing of the AUTO DOCK button initiates activation of the pump and initiates the controller to start power consumption measurement. As described with reference to FIG. 4, in one embodiment a power increase of around 5% was found to reliably indicate that the dock leveller has reached the maximally raised position. As such, when an increase of at least 5%, preferably 8% in power consumption is detected, the pump is inactivated thereby allowing the dock leveller to lower. It is noted that the above mentioned power increase may rise to 20 to 25% if the lip is extended on the load leveller. In other embodiments, the dock leveller may actively lowered by the pump. The increase in power consumption is detected using the current average power consumption value calculated as described with reference to FIG. 6. The current average power consumption value that is continuously updated as the power measuring device acquires new sample measurements, as described above. The current average power consumption value, which represents a set of the most recently calculated power consumption values, is compared against the reference power consumption value which indicates the average power consumption value prior to a detection of an increase in the power consumption value. As the dock leveller lowers after having reached the maximally raised position, it rests on the back of a vehicle

In the embodiment the dock leveller lip is extended after use (after a loading or unloading process has been completed). It is desirable to ensure that the dock leveller lip is lowered when the dock leveller returns to its resting position, where it may be stowed away. This involves lowering the dock leveller, then activating the motor again, so that the ramp of the dock leveller is raised to a position between its resting position and its maximally raised position (i.e. raised for a part of the distance to the maximally raised position) to allow the lip to lower. Once the lip is lowered, the motor is deactivated and the ramp also lowers, such that the leveller is back in the original stowed position. The lip can be connected to the ramp as hinged or telescopic type.

In some embodiments, only a selected combination of running modes may be included. For example, in some embodiments only manual and automatic return sequence activating modes may be present.

As discussed with reference to FIGs. 1A to 1C, known dock levellers do not know how long each of the time it takes for the dock leveller to travel between different positions. Therefore, known dock levellers may waste energy when returning to its resting position after having been operated as described earlier.

In contrast, the dock leveller according to an embodiment of the present invention is able to determine the travel times and the ratio of the dock leveller speed when moving up and down between different positions, as described above. More specifically, the principle of calculating T(resting to top) and the ratio of the dock leveller speed when moving up and down is described in detail above with reference to FIGs. 2A to 2D.

Assuming that the dock leveller has a typical structural configuration, an assumption is made that the distance from the resting position to the maximally raised position is twice as much as the distance from the resting position to the maximally lowered position. At most, the two distances are assumed to be equal. Using this assumption and using the speed ratio found as discussed above, it is possible to find out all the time durations it takes the dock leveller to move between different positions, and hence set operation time of the dock leveller to ensure that it is operated as efficiently as possible.

In other words, the controller according to this embodiment of the present invention is able and configured to set the time for the dock leveller to raise or lower to stow the lip automatically, by setting the dock leveller operation time when returning to resting position as a predetermined amount of fraction of the travel times found for the dock leveller moving up and down between different positions.

Referring back to FIGs. 2A to 2D, a number of additional time periods are defined as follows. The time it takes for the dock leveller to return from its maximally raised position to its resting position, is denoted as T(top to resting), the time it takes to move down from the resting position to the maximally lowered position is denoted as T(resting to bottom), and the time it takes to move from the maximally lowered position to the resting position is denoted as T(bottom to resting).

In this case, using the assumption that the distance to the maximally raised position and the minimally raised position are equal, the dock leveller can be set to be lowered for an amount of time that ensures that it has reached the maximally lowered position. The timer can then be started to measure the time it takes for the dock leveller to move from the maximally lowered position to the maximally raised position. This measurement would be T(resting to top) + T(bottom to resting). As T(resting to top) has already been measured, it is possible to find out T(bottom to resting). Similarly, T(top to resting) and T(resting to bottom) can be calculated by using T(resting to top) and the speed ratio of the dock leveller moving up and down.

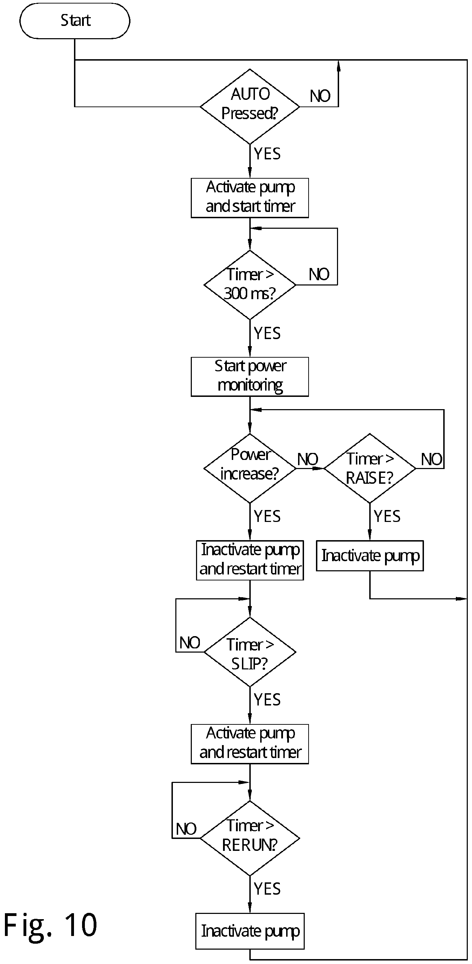

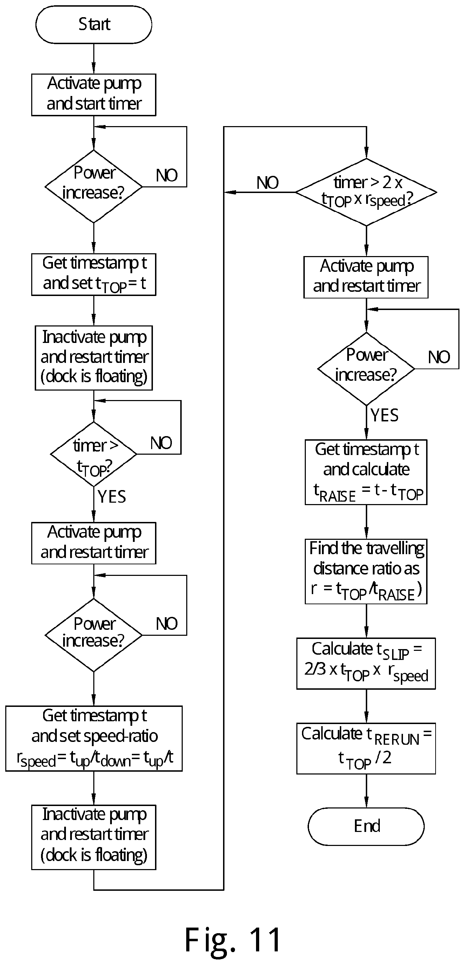

As mentioned above, the auto-return sequence requires the dock leveller to move up a certain distance between the resting position and the maximally raised position, after having been lowered below the resting position. As all the time durations are known, the dock leveller can be controlled to run for a predetermined fraction of the time durations found for the dock leveller. Such predetermined fractions of time durations that the dock leveller operates for are also considered as time constants of the dock leveller. Auto-return sequence as described in FIG. 10 can be run and the time constants may be found by following the flow chart of FIG. 11. It should be noted that once the time constants have been found for a dock leveller, the same time constants may be used for a predetermined amount of operation cycles without having to find the time constants each time the dock leveller is operated.

An embodiment of the controller according to the present invention is able to calculate this time, and use it to calculate an efficient time constants during which the dock leveller can be raised and lowered for to ensure that the dock leveller has retracted fully and reach its stowed position in an efficient manner. There are three time constants to be found, RAISE time, SLIP time and RERUN time. RAISE time is the same as T(bottom to resting). In some embodiments, T(resting to top) time periods may be collected over a number of operation, and an average T(resting to top) time period may be used. SLIP time is a fraction of T(top to resting), and RERUN time is a fraction of T(resting to top).

For the auto-return sequence to work properly, the swing lip is required to be fully retracted in order for the dock leveler to rest at the resting position. If it is not fully retracted, the dock leveller will continue floating all the way down to the bottom position. Two possible scenarios ensure correct operation. Either the dock leveller has been running long enough (as long as the RAISE time) to ensure it is above the resting position (even if it was started from bottom position) but without having reached top position yet (no power increase detected). In this case the auto-return sequence may finish right away, and the dock leveller will lower into resting position. The other scenario happens if the dock leveller reaches top level position (power increase detected) before the RAISE time has passed. This of course happens if the dock leveller starting position was already close to top position. In this case the swing lip has already begun turning up a little, and in order for it to fully retract, the dock leveller must first lower for a period (the SLIP time) and then activate again for a short period (the RERUN time). This ensures that the swing lip is fully retracted so that the dock leveller afterwards will return safely to resting position.

With reference to FIG. 10, the auto-return sequence starts when the pressing of an AUTO button of the controller is detected. With the detection of the pressing of the AUTO button, which indicates that the auto-return sequence has been activated, the timer of the controller is started. The controller checks whether timer has been running for more than 300ms before starting the power monitoring. In other embodiments, the controller may simply disregard any power data obtained from monitoring for the first 300ms after the motor is activated. This is to ensure that the power monitoring starts after the power consumption jump that occurs as the motor is turned on. The 300ms value may be selected according to the start-up properties of the particular motor used, but needs to be long enough to miss the power consumption jump and short enough to ensure that the power consumption activity of the leveller cycle is monitored sufficiently throughout the cycle. The function diagram indicates that after the power monitoring, any power increase is checked for. If there is no power increase and the timer has been running for less than RAISE time, the controller continues to monitor the power consumption. Where power increase has not been detected and the timer has been running for longer than RAISE time, the controller is configured to output a signal to inactivate the motor. RAISE time will be discussed in more detail below. In essence, this check against detection of power increase and RAISE time is to say where the dock leveller happens to be above the resting position but not yet in the maximally raised position, the auto-return features simply turns off the power by sending the deactivate signal to the motor and allow the dock leveller to travel down to the resting position. This is because without having reached the maximally raised position, it is assumed that the lip will not have been raised.

The block diagram illustrates that where power increase is detected, the motor is deactivated and the timer is restarted. Then, this restarted timer is compared against SLIP time. This is equivalent to the part which allows the dock leveller to lower part of the way to the maximally lowered position. The pump is activated and the timer is once again started when the timer equals the SLIP time value.

The timer value is then compared against RERUN time value. This is equivalent to the part which allows the dock leveller to raise a part of the way to the maximally raised position to allow the lip to lower. Where the timer value becomes bigger than the RERUN value, the pump is inactivated.

SLIP and RERUN values will be discussed in more detail below. In essence, where the dock leveller of the preferred embodiment reaches the maximally raised position such that the lip is extended, the dock leveller is allowed to travel down for a certain period of time (SLIP time), then raised a little again (RERUN time) so that the lip retracts for resting position by ensuring that the dock leveller is above resting position, and then finally allowed to travel down again to resting position. In other words, the SLIP and RERUN times are calculated so that the leveller is not raised into the maximally raised position but in-between the resting and maximal positions, in order to allow lip to retract for the resting position. In the resting position, the dock leveller may either be held in its position resting on the lip, or by the valves in the hydraulic pump being turned off, thereby holding the dock leveller in its position.

In the controller of the present invention, the RAISE, SLIP and RERUN time constants may be found automatically at installation time (and/or periodically) using the algorithm as outlined in flow chart of FIG. 11.

The algorithm is started when the dock leveller is in the resting position. The timer is started as the pump is activated and is continued to run until an increase in power is detected. Once the power increase is detected, a time stamp is obtained. This time stamp, Ttop indicates the time it takes for the leveller to travel from the resting position to the maximally raised position. This is equivalent to T(resting to top) as illustrated in Fig.1B. The leveller is then allowed to float down for the time which is equivalent to Ttop. After the leveller has been allowed to float down for Ttop (hence Ttop = Tdn), the pump is once more activated and the timer is also restarted so that the time it takes for the leveller to reach the maximally raised position is again measured, which is denoted as Tup. If the leveller travels up more quickly than it moves down, the leveller will not have reached the resting position. In this case, the time it takes for the leveller to reach the maximally raised position will be shorter than before. This is to say, Tup will be shorter than Ttop. If the leveller travels down more quickly than it moves up, the leveller will be below resting position after it has been allowed to move downward for the time period Ttop. In this case, the time it takes for the leveller to reach the maximally raised position a second time will be longer than before. This is to say, Tup will be longer than Ttop. As discussed above, Ttop is set to be the same as Tdn. As the distance by which the leveler is lowered during its downward movement is the same as the distance it traverses during the second raising phase, Ttop (or its equivalent Tdown) and Tup can be considered to represent the lowering and raising speeds of the dock leveler respectively. Using the ratio between Tup and Tdn, therefore, it is possible to find the ratio of the leveller's upward and downward travelling speeds. Using this speed ratio, a re-run sequence comprising the most efficient operation time to ensure that the dock leveller is properly stowed is determined.

The controller is also configured, in one embodiment, to determine the time it takes to raise the dock leveler from its maximally lowered position to the resting position. To allow the dock leveler to lower to the maximally lowered position the dock leveler is allowed to lower for twice the time that is known to be required for returning to the resting position. The time required for returning to the resting position is Tdn multiplied by the speed ratio. The factor of two used to ensure that the dock leveler is lowered to the maximally lowered position is stored in a memory of the controller and will achieve lowering to the maximally lowered position if the distance between the resting position and the maximally lowered position is smaller than or equal to the distance between the resting position and the maximally raised position. The controller is configured to store a larger multiplication factor during setup of the system to accommodate situation where the distance between the resting position and the maximally lowered position is larger than the distance between the resting position and the maximally raised position.

The time it takes the dock leveler to travel from the maximally lowered position to the maximally raised position (as detected/detectable in the above discussed manner by measuring an increase in power consumption) is then measured and subtract from the thus measured time the already known/previously measured time required to travel from the resting position to the maximally raised position. Based on the thus determined time for travelling from the maximally lowered position to the resting position and Tdn the ratio of these two distances can be determined as illustrated in FIG. 11.

Some dock levelers with swing lips will extend the swing lip once they have reached their topmost position. Thereafter the dock leveler is lowered so that the extended swing lip comes to rest on the back of a vehicle parked in front of it, ready for loading and unloading. To stow the dock leveler the swing lip needs to be retracted to a vertical position in which it points downward from the main platform of the dock leveler, so that the dock leveler can rest on it without expending energy when in the resting position. During an auto return sequence for automatically stowing away the dock leveler the dock leveler is raised for a period of time corresponding to the time it takes for it to travel from its maximally lowered position to the resting position. When the dock leveler is raised in this manner and if no increase in power consumption indicating that the maximally raised position has been reached is detected, it can be safely assumed that the dock leveler is between the resting position and the maximally raised position. As the swing lip only extends when the dock leveler is in the maximally raised position the swing lip will be in the retracted position under these circumstances. The dock leveler can then be lowered until it rests on the retracted swing lip.

An example with realistic numbers applied to the installation time finding algorithm as illustrated in FIG. 7 is described below, wherein the steps are as follows:
Assume dock level is in resting (floor) position before starting the monitoring of power consumption and the timer.

Activate the motor and start the timer to measure the time it takes for the dock leveller to move from the resting position to the maximally raised position (detected from power increase). In this example, assume 12 seconds were measured for this, such that Ttop is 12s.

Inactivate pump motor and allow the dock leveller to float (i.e. move downwards) for a similar amount of time as Ttop, hence for 12s. Depending on mechanical construction, the dock leveller may be moving faster upwards or downwards. This means that the dock leveller may be above or below the resting position.

Reactivate the motor, reset and restart timer for measuring the time for moving from its position at the time to the maximally raised position (again detected by a power increase). In this example, assume 16 seconds (Tup) were measured. In this case, this indicates that the dock leveller travelled for longer than when it started from the resting position. Hence, the dock leveller must have been below the resting position when it was allowed to float for Ttop, which indicates that in this example, the dock leveller moves to the maximally raised position slower than it moves to the maximally lowered position (i.e. it moves down more quickly than it moves up).

Using the time data measured thus far, the dock leveller speed ratio (going up versus going down) is calculated. In this example assume 12 seconds / 16 seconds = 0.75. As noted above, it takes more time for the dock leveller to move some distance upwards than it takes to move the same distance downwards (i.e. the dock leveller moves up at 75% of the speed that it moves down).

With the assumption that the total travelling distance below the resting position is not larger than the total travelling distance above the resting position (normally it is about 1/3 below and 2/3 above) the time required to float the dock leveller is calculated as twice the distance from the maximally raised position to the resting position (which is twice the Ttop multiplied by the speed ratio, rspeed). By floating for this amount of time the assumption is that bottom line must have been reached. In this example, it would be 2 x 12 x 0.75 = 18 seconds. In essence the dock leveler moves from the resting position to the maximally raised position in 12 seconds but moves faster in the other direction (12 x 0.75 = 9 seconds) and this is doubled to 18 seconds.

After it is ensured that the dock leveler is at the maximally lowered position, the pump is reactivate, and the timer is reset and restarted to measure the time for moving from the maximally lowered position to the maximally raised position. The time difference between the time measured here and the time it took for the dock leveler to move from the resting position to the maximally raised position is considered to equal the time the dock leveler takes to move from the maximally lowered position to the resting position, wherein this time constant is considered as the RAISE time. If under normal operation having moved upwards for this amount of time (and possibly slightly more than this time constant) without having reached top position, the auto return sequence is configured to end. This means that the motor is deactivated such that the dock leveller may float into the resting position, as it is assumed that the lip must be lowered (not having approached the maximally raised position). In this example, the RAISE time is considered to be 18 - 12 = 6 seconds.

Having found both the RAISE time and the time to move from the resting position to the maximally raised position, the ratio between the two time constants is considered to equal the travelling distance ratio, which is the ratio between travelling distance above and below the resting position. In this example, it is considered to be 12 seconds / 6 seconds = 2 (or 2:1) that is, the distance above the resting position is twice the distance above the resting position.

Finally the SLIP time and RERUN time constants may be calculated. The SLIP time may appropriately be calculated so that the dock leveler floats 2/3 of the total travelling distance above floor level towards the resting position and then reruns for half of the same distance in order to fully retract the swing lip (ending up around a sixth of the travelling distance from maximally raised position). In this example, it would mean that the dock leveler must float for 2/3 x 12 x 0.75 = 6 seconds and then rerun for 12 / 2 = 6 seconds.

Some of the other functions of the controller, carried out mainly by the protection module, which are to determine whether the leveller is running against a fixed mechanical stop and should not be raised further, whether the dock leveller is running as normal, whether there are any broken wires in the motor and output a signal to inactivate the motor, and whether there are any other issues in the motor that it should be inactivated, will now be discussed.

If at any time the motor power consumption obtained during the motor activation exceeds the most recently obtained steady state power value by a predetermine amount, in this embodiment at least a factor of two, the controller is configured to enter an error state and outputs a signal to cut off power from the motor such that the motor is turned off. In this embodiment, said deactivation signal is sent to a switch, or a contactor, which opens on receiving the deactivation signal thus shutting down the motor. Therefore, the controller of the preferred embodiment is able to function as a motor protection circuit from monitoring the average power consumption of the motor continuously and comparing it to the steady state power consumption value of the motor of the specific leveller. This enables the controller to replace an ordinary mechanical motor protection circuit, which is expensive, bulky and requires manual setting adjusted according to the motor of the specific leveller in question.

In some embodiments, the average T(resting to top) value may be used to check if the dock leveller is operating as normal. For example, the timer may be started when the motor is activated with the dock leveller in the resting position, and the time measured is checked against the average T(resting to top). This check is the same as the steps of checking the RAISE time against detection of power increase discussed with reference to FIG. 10. If the time measured is higher than T(resting to top) by more than a predetermined amount and yet it has not been detected that the dock leveller has reached the maximally raised position, the controller determines that there may be an error. In this case, the controller may send a signal to deactivate the motor or turn the hydraulic valves on to retain the dock leveller in current (unknown error) position.

In addition to being able to replace a bulky and expensive mechanical motor, the controller is able to detect a broken wire in one of the three phases of the motor, which is a function that an ordinary mechanical motor protection circuit cannot carry out.

The controller of a preferred embodiment is able to detect a broken wire in a motor easily on the basis of the above mentioned power monitoring. In essence, the broken wire is detected as a missing phase. When storing the power measurements in the circular buffer as described above, an algorithm which checks whether any of the values representing the current in the three phases are close to zero over a number of measuring points. If a value which is determined to be close to zero or zero is found, it is an indication that the wire of the particular phase is disconnected. FIG. 6 is a function block diagram which illustrates detection of a broken wire. As can be seen, the power signal values are sampled to obtain an absolute value of the power signals, then these absolute values of each of the phases within a given period of time is checked against a zero-power threshold limit to determine whether the value is close to zero. The zero-power threshold limit may be set to be slightly larger than zero in order to suppress measurement errors or any rounding errors.

If a power signal is calculated to be lower than the zero-power threshold limit, it is determined that one of the wires must be broken and the controller is configured to then send a deactivation signal which results in the motor entering an error mode. This deactivation signal essentially is output to a switch as described above, which is configure to open on receipt of a deactivation signal to stop any power supply to the motor. An indicator, such as an LED may be connected to indicate to the user when the motor enters such error mode. In the broken wire error mode, there may be separate LEDs representing different phases so that the user may be alerted as to which of the wires is broken without any need to test the wires further. As such, the controller of the present invention is able to detect broken wire without any additional components to those that can replace a motor protection circuit.

It will be appreciated that, if only a single phase of the motor's power supply was monitored, the monitoring device of the controller could not distinguish between a situation where there is no power applied to the motor and a situation where, in the single monitored phase no power flows because the wire is broken. By monitoring a second phase it is guaranteed that a loss of current due to a broken phase can be detected.

The switch actuator controller is configured to output signals to the motor for operating in the different operation modes discussed above (depending on whether the motor should be activated or deactivated). At the same time, the switch actuator controller receives signals from the protection module. The switch actuator controller is configured in such a way that the protection module always overrides any output signal that is independently produced by the switch actuator controller (for operating in the different operation modes). As such, during any operation, if the protection module determines that there may be an error, the signal to deactivate the motor overrides any other signals. In some embodiments, the protection module may also output a signal to the hydraulic valves to stop and maintain the dock leveller in the current unknown position.

The controller of the present invention may be connected to any dock leveller to monitor the power consumption and travelling speed of the specific dock leveller and adjust the motor running time to adapt the behaviour of the dock leveller suitable for its power consumption level and speed to ensure power efficiency. According to the present invention, therefore, it is possible to remove the need of a motor protective circuit, as well as detecting a broken wire in any of the phases, which is a function that known motor protective circuits do not have, maximise efficiency in the motor running by detecting when the leveller has reached maximally raised position, and configuring the leveller operation time when returning to resting position so as to ensure that power is not wasted.

While certain embodiments have been described, these embodiments have been presented by way of example only, and are not intended to limit the scope of the inventions. Indeed the novel methods and apparatus described herein may be embodied in a variety of other forms; furthermore, various omissions, substitutions and changes in the form of methods and apparatus described herein may be made without departing from the scope of the accompanying claims.

## Claims

1. A controller for a dock leveller comprising a motor, wherein the controller is configured to determine when the dock leveller is approaching a maximally raised position (MRP), by detecting an increase in power consumption of the motor;
wherein the controller is configured to determine a first time period (Tup) taken by the dock leveller to move from its resting position (RP) to its maximally raised position (MRP), to thereafter allow the dock leveller to lower for the determined first time period (Tup), to determine a second time period (Tdown) taken by the dock leveller to again move to its maximally raised position (MRP) and to calculate a speed ratio of the dock leveller based on the first (Tup) and second (Tdown) time periods;
and wherein the controller is configured to adjust operation time of the dock leveller based on the speed ratio and one or both of the acquired time periods (Tup, Tdown).

2. A controller according to claim 1, comprising a power monitoring unit configured to acquire power consumption values and determine, using the power consumption data acquired, an average power consumption value for comparing against any later calculated power consumption value.

3. A controller according to claim 2, wherein the power monitoring unit is configured to disregard power consumption data for a predetermined time period after the motor is activated.

4. A controller according to claim 2 or 3, wherein the power monitoring unit is configured to determine the power consumption value by taking a measurement of the current for at least two phases of the motor and outputting a signal for decreasing the power supplied to the motor when any of the measured current values is to be zero.

5. A controller according to any of claims 2 to 4, wherein the controller comprises a switch connectable to interrupt a power supply to the motor of the dock leveller, the controller configured to output a signal for the switch to open when the most recently calculated power consumption exceeds the average power consumption by at least a safety factor.

6. A controller according to claim 1, further configured to allow the dock leveller to lower for a period of time sufficient for the dock leveller to reach its maximally lowered position (MLP), to subsequently raise the dock leveller until it has reached it maximally raised position (MRP) and to subtract the first time period (Tup) from the time required to reach the maximally raised position (MRP) from the maximally lowered position (MLP), thereby determining a time period required for the dock leveller to reach the resting position (RP) from the maximally lowered position (MLP).

7. A dock leveller system comprising a controller according to any of the preceding claims, a dock leveller, a power source and a switch wherein the controller is connected between the dock leveller and the power source.

8. A dock leveller system according to claim 7, wherein the controller comprises output ports connected to electrically activatable hydraulic valves of the dock leveller system.

9. A method of controlling a dock leveller comprising a motor, the method comprising: determining when the dock leveller is approaching a maximally raised position (MRP), by detecting an increase in power consumption of the motor;
wherein the method comprises determining a first time period (Tup) taken by the dock leveller to move from its resting position (RP) to its maximally extended position (MRP), to thereafter allow the dock leveller to lower for the determined first time period (Tup), and determining a second time period (Tdown) taken by the dock leveller to again move to its maximally extended position (MRP) and to calculate a speed ratio of the dock leveller based on the first (Tup) and second (Tdown) time periods;
and wherein the method comprises adjusting operation time of the dock leveller based on the speed ratio and one or both of the acquired time periods (Tup, Tdown).

10. A method according to claim 9, wherein the method comprises acquiring power consumption values and determining, using the power consumption data acquired, an average power consumption value for comparing against any later calculated power consumption value; and
wherein the method further comprises disregarding power consumption data for a predetermined time period after the motor is activated.

11. A method according to claim 10, wherein the method comprises determining the power consumption value by taking a measurement of the current for at least two phases of the motor and outputting a signal for decreasing the power supplied to the motor when any of the measured current values is to be zero.

12. A method according to claim 10 or 11, wherein the method comprises outputting a signal for a switch, connectable to interrupt a power supply to the motor of the dock leveller, to open when the most recently calculated power consumption exceeds the average power consumption by at least a safety factor.

13. A computer storage medium comprising code for execution by a processor, the code, when executed by a processor causing the processor to perform any of the methods of claims 9 to 12, wherein the processor is a processor of a controller of a dock leveller.

## Patentansprüche

1. Steuerung für eine Überladebrücke, die einen Motor umfasst, wobei die Steuerung dazu konfiguriert ist, zu bestimmen, wann sich die Überladebrücke einer maximal angehobenen Position (MRP) nähert, indem eine Erhöhung der Leistungsaufnahme des Motors erfasst wird,
wobei die Steuerung dazu konfiguriert ist, eine erste Zeitspanne (Tup) zu bestimmen, die von der Überladebrücke benötigt wird, um sich von ihrer Ruheposition (RP) in ihre maximal angehobene Position (MRP) zu bewegen, um danach zu ermöglichen, dass sich die Überladebrücke für die bestimmte erste Zeitspanne (Tup) absenkt, um eine zweite Zeitspanne (Tdown) zu bestimmen, die von der Überladebrücke benötigt wird, um sich wieder in ihre maximal angehobene Position (MRP) zu bewegen, und um ein Geschwindigkeitsverhältnis der Überladebrücke auf Grundlage der ersten (Tup) und der zweiten (Tdown) Zeitspanne zu berechnen,
und wobei die Steuerung dazu konfiguriert ist, die Betriebszeit der Überladebrücke auf Grundlage des Geschwindigkeitsverhältnisses und einer oder beider erlangten Zeitspannen (Tup, Tdown) einzustellen.

2. Steuerung nach Anspruch 1, die eine Leistungsüberwachungseinheit umfasst, die dazu konfiguriert ist, Leistungsaufnahmewerte zu erlangen und unter Verwendung der erlangten Leistungsaufnahmedaten einen durchschnittlichen Leistungsaufnahmewert zum Vergleichen mit einem beliebigen später berechneten Leistungsaufnahmewert zu bestimmen.

3. Steuerung nach Anspruch 2, wobei die Leistungsüberwachungseinheit dazu konfiguriert ist, Leistungsaufnahmedaten für eine vorbestimmte Zeitspanne nach dem Aktivieren des Motors zu ignorieren.

4. Steuerung nach Anspruch 2 oder 3, wobei die Leistungsüberwachungseinheit dazu konfiguriert ist, den Leistungsaufnahmewert zu bestimmen, indem sie eine Messung des Stroms für mindestens zwei Phasen des Motors vornimmt und ein Signal zum Verringern der dem Motor zugeführten Leistung ausgibt, wenn einer der gemessenen Stromwerte Null sein sollte.

5. Steuerung nach einem der Ansprüche 2 bis 4, wobei die Steuerung einen Schalter umfasst, der angeschlossen werden kann, um eine Stromversorgung zu dem Motor der Überladebrücke zu unterbrechen, wobei die Steuerung dazu konfiguriert ist, ein Signal zum Öffnen des Schalters auszugeben, wenn die zuletzt berechnete Leistungsaufnahme die durchschnittliche Leistungsaufnahme um mindestens einen Sicherheitsfaktor übersteigt.

6. Steuerung nach Anspruch 1, die ferner dazu konfiguriert ist, es der Überladebrücke zu ermöglichen, sich für eine Zeitspanne abzusenken, die ausreicht, damit die Überladebrücke ihre maximal abgesenkte Position (MLP) erreicht, um anschließend die Überladebrücke anzuheben, bis sie ihre maximal angehobene Position (MRP) erreicht hat, und um die erste Zeitspanne (Tup) von der Zeit abzuziehen, die erforderlich ist, um die maximal angehobene Position (MRP) von der maximal abgesenkten Position (MLP) aus zu erreichen, wodurch eine Zeitspanne bestimmt wird, die erforderlich ist, damit die Überladebrücke die Ruheposition (RP) von der maximal abgesenkten Position (MLP) aus erreicht.

7. Überladebrückensystem, umfassend eine Steuerung nach einem der vorhergehenden Ansprüche, eine Überladebrücke, eine Stromquelle und einen Schalter, wobei die Steuerung zwischen der Überladebrücke und der Stromquelle angeschlossen ist.

8. Überladebrückensystem nach Anspruch 7, wobei die Steuerung Ausgangsanschlüsse umfasst, die mit elektrisch aktivierbaren Hydraulikventilen des Überladebrückensystems verbunden sind.

9. Verfahren zum Steuern einer Überladebrücke, die einen Motor umfasst, wobei das Verfahren Folgendes umfasst: Bestimmen, wann sich die Überladebrücke einer maximal angehobenen Position (MRP) nähert, indem ein Anstieg der Leistungsaufnahme des Motors erfasst wird,
wobei das Verfahren das Bestimmen einer ersten Zeitspanne (Tup), die von der Überladebrücke benötigt wird, um sich von ihrer Ruheposition (RP) in ihre maximal ausgefahrene Position (MRP) zu bewegen, um danach zu ermöglichen, dass sich die Überladebrücke für die bestimmte erste Zeitspanne (Tup) absenkt, und das Bestimmen einer zweiten Zeitspanne (Tdown), die von der Überladebrücke benötigt wird, um sich wieder in ihre maximal ausgefahrene Position (MRP) zu bewegen und ein Geschwindigkeitsverhältnis der Überladebrücke auf Grundlage der ersten (Tup) und der zweiten (Tdown) Zeitspanne zu berechnen, umfasst;
und wobei das Verfahren das Einstellen der Betriebszeit der Überladebrücke auf Grundlage des Geschwindigkeitsverhältnisses und einer oder beider erlangten Zeitspannen (Tup, Tdown) umfasst.

10. Verfahren nach Anspruch 9, wobei das Verfahren das Erlangen von Leistungsaufnahmewerten und das Bestimmen eines durchschnittlichen Leistungsaufnahmewerts zum Vergleichen mit einem beliebigen später berechneten Leistungsaufnahmewert unter Verwendung der erlangten Leistungsaufnahmedaten umfasst, und
wobei das Verfahren ferner das Ignorieren von Leistungsaufnahmedaten für eine vorbestimmte Zeitspanne nach dem Aktivieren des Motors umfasst.

11. Verfahren nach Anspruch 10, wobei das Verfahren das Bestimmen des Leistungsaufnahmewerts durch Vornehmen einer Messung des Stroms für mindestens zwei Phasen des Motors und das Ausgeben eines Signals zum Verringern der dem Motor zugeführten Leistung umfasst, wenn einer der gemessenen Stromwerte Null sein sollte.

12. Verfahren nach Anspruch 10 oder 11, wobei das Verfahren das Ausgeben eines Signals zum Öffnen eines Schalter umfasst, der angeschlossen werden kann, um eine Stromversorgung zu dem Motor der Überladebrücke zu unterbrechen, wenn die zuletzt berechnete Leistungsaufnahme die durchschnittliche Leistungsaufnahme um mindestens einen Sicherheitsfaktor übersteigt.

13. Computerspeichermedium, das Code zur Ausführung durch einen Prozessor umfasst, wobei der Code, wenn er durch einen Prozessor ausgeführt wird, den Prozessor dazu veranlasst, eines der Verfahren der Ansprüche 9 bis 12 auszuführen, wobei der Prozessor ein Prozessor einer Steuerung einer Überladebrücke ist.

## Revendications

1. Dispositif de commande pour un niveleur de quai comprenant un moteur, dans lequel le dispositif de commande est configuré pour déterminer quand le niveleur de quai s'approche d'une position relevée maximale (MRP), en détectant une augmentation de la consommation d'énergie du moteur ;
dans lequel le dispositif de commande est configuré pour déterminer un premier laps de temps (Tup) nécessaire au niveleur de quai pour passer de sa position de repos (RP) à sa position relevée maximale (MRP), pour permettre ensuite au niveleur de quai de s'abaisser pour le premier laps de temps déterminé (Tup), pour déterminer un deuxième laps de temps (Tdown) nécessaire au niveleur de quai pour passer à nouveau à sa position relevée maximale (MRP) et pour calculer un rapport de vitesse du niveleur de quai basé sur le premier (Tup) et le deuxième (Tdown) laps de temps ;
et dans lequel le dispositif de commande est configuré pour ajuster le temps de fonctionnement du niveleur de quai sur la base du rapport de vitesse et de l'un ou des deux laps de temps acquis (Tup, Tdown).

2. Dispositif de commande selon la revendication 1, comprenant une unité de surveillance de puissance configurée pour acquérir des valeurs de consommation de puissance et déterminer, à l'aide des données de consommation de puissance acquises, une valeur de consommation de puissance moyenne à comparer à toute valeur de consommation de puissance calculée ultérieurement.

3. Dispositif de commande selon la revendication 2, dans lequel l'unité de surveillance de puissance est configurée pour ne pas tenir compte des données de consommation de puissance pendant un laps de temps prédéterminé après l'activation du moteur.

4. Dispositif de commande selon la revendication 2 ou 3, dans lequel l'unité de surveillance de puissance est configurée pour déterminer la valeur de consommation de puissance en prenant une mesure du courant pour au moins deux phases du moteur et en émettant en sortie un signal pour diminuer la puissance fournie au moteur lorsque l'une des valeurs de courant mesurées doit être nulle.

5. Dispositif de commande selon l'une des revendications 2 à 4, dans lequel le dispositif de commande comprend un interrupteur pouvant être connecté pour interrompre une alimentation électrique du moteur du niveleur de quai, le dispositif de commande étant configuré pour émettre en sortie un signal pour que l'interrupteur s'ouvre lorsque la consommation électrique calculée le plus récemment dépasse la consommation électrique moyenne d'au moins un facteur de sécurité.

6. Dispositif de commande selon la revendication 1, configuré en outre pour permettre au niveleur de quai de s'abaisser pendant un laps de temps suffisant pour que le niveleur de quai atteigne sa position abaissée maximale (MLP), pour relever ensuite le niveleur de quai jusqu'à ce qu'il ait atteint sa position relevée maximale (MRP) et pour soustraire le premier laps de temps (Tup) du temps nécessaire pour atteindre la position relevée maximale (MRP) à partir de la position abaissée maximale (MLP), déterminant ainsi un laps de temps nécessaire pour que le niveleur de quai atteigne la position de repos (RP) à partir de la position abaissée maximale (MLP).

7. Système de niveleur de quai comprenant un dispositif de commande selon l'une quelconque des revendications précédentes, un niveleur de quai, une source d'énergie et un interrupteur, dans lequel le dispositif de commande est connecté entre le niveleur de quai et la source d'énergie.

8. Système de niveleur de quai selon la revendication 7, dans lequel le dispositif de commande comprend des ports de sortie connectés à des vannes hydrauliques activables électriquement du système de niveleur de quai.

9. Procédé de commande d'un niveleur de quai comprenant un moteur, le procédé comprenant : la détermination du moment où le niveleur de quai s'approche d'une position relevée maximale (MRP), par la détection d'une augmentation de la consommation d'énergie du moteur ;
dans lequel le procédé comprend la détermination d'un premier laps de temps (Tup) nécessaire au niveleur de quai pour passer de sa position de repos (RP) à sa position d'extension maximale (MRP), pour permettre ensuite au niveleur de quai de s'abaisser pour le premier laps de temps déterminé (Tup), et la détermination d'un deuxième laps de temps (Tdown) nécessaire au niveleur de quai pour passer à nouveau à sa position d'extension maximale (MRP) et pour calculer un rapport de vitesse du niveleur de quai sur la base des premier (Tup) et deuxième (Tdown) laps de temps ;
et dans lequel le procédé comprend l'ajustement du temps de fonctionnement du niveleur de quai sur la base du rapport de vitesse et de l'une ou des deux laps de temps acquis (Tup, Tdown).

10. Procédé selon la revendication 9, dans lequel le procédé comprend l'acquisition de valeurs de consommation d'énergie et la détermination, à l'aide des données de consommation d'énergie acquises, d'une valeur moyenne de consommation d'énergie à comparer à toute valeur de consommation d'énergie calculée ultérieurement ; et
où le procédé comprend en outre le fait d'ignorer des données de consommation d'énergie pour un laps de temps prédéterminé après l'activation du moteur.

11. Procédé selon la revendication 10, où le procédé comprend la détermination de la valeur de consommation d'énergie en effectuant une mesure du courant pour au moins deux phases du moteur et en émettant en sortie un signal pour diminuer la puissance fournie au moteur lorsque l'une des valeurs de courant mesurées doit être nulle.

12. Procédé selon la revendication 10 ou la revendication 11, où le procédé comprend l'émission en sortie d'un signal pour qu'un interrupteur, pouvant être connecté pour interrompre une alimentation électrique au moteur du niveleur de quai, s'ouvre lorsque la consommation électrique calculée le plus récemment dépasse la consommation électrique moyenne d'au moins un facteur de sécurité.

13. Support de stockage informatique comprenant du code destiné à être exécuté par un processeur, le code, lorsqu'il est exécuté par un processeur, amenant le processeur à exécuter l'un quelconque des procédés des revendications 9 à 12, dans lequel le processeur est un processeur d'un dispositif de commande d'un niveleur de quai.
